# EUROPEAN PATENT APPLICATION

(11) **EP 4 791 008 A1**
(43) Date of publication of application: **12.08.2026**
(21) Application number: 24874094.6
(22) Date of filing: 30.09.2024
(51) Int. Cl.: H04N 21/431, H04N 21/4788

(54) **INFORMATION DISPLAY METHOD AND APPARATUS, DEVICE AND STORAGE MEDIUM**

(30) Priority: 07.10.2023 CN 202311288579
(71) Applicant: Beijing Zitiao Network Technology Co., Ltd., Beijing 100190 (CN)
(72) Inventor: FANG, Angxiang, Beijing 100028 (CN); WU, Xuheng, Beijing 100028 (CN)
(74) Representative: Grünecker Patent- und Rechtsanwälte PartG mbB
(86) International application number: PCT/CN2024/123015
(87) International publication number: WO 2025/073277

(57) **Abstract**

Embodiments of the application relates to a method, apparatus, device and storage medium for displaying information. The method proposed herein includes: presenting a first area in a live streaming interface of a live stream, the first area being configured to display interactive information based on a preset information display condition, the interactive information corresponding to an interaction event associated with the live stream; and in response to a target interaction event associated with the live stream: displaying target interactive information corresponding to the target interaction event at least in the first area in response to the target interaction event matching the information display condition; or displaying the target interactive information in a second area of the live streaming interface in response to the target interaction event not matching the information display condition, the first area being different from the second area. Based on the above manner, the embodiments of the present disclosure may improve the efficiency of information acquisition within the live stream.

## Description

This application claims the priority to Chinese Patent Application No. 202311288579.1, filed on October 07, 2023, and entitled "METHOD, APPARATUS, DEVICE AND STORAGE MEDIUM FOR DISPLAYING INFORMATION", the entire content of which is incorporated herein by reference.

### FIELD

Example embodiments of the present disclosure generally relate to the field of computers, and in particular, to a method, apparatus, device and computer-readable storage medium for displaying information.

### BACKGROUND

With the development of computer technologies, the Internet has become an important source for people to acquire various contents. With the rapid development of the live streaming technology for content propagation by using the Internet and the streaming media technology, people may perform various types of interaction through a live stream, and information with rich types may be acquired through the live stream.

### SUMMARY

In a first aspect of the present disclosure, a method for displaying information is provided. The method includes: presenting a first area in a live streaming interface of a live stream, the first area being configured to display interactive information based on a preset information display condition, the interactive information corresponding to an interaction event associated with the live stream; and in response to a target interaction event associated with the live stream: displaying target interactive information corresponding to the target interaction event at least in the first area in response to the target interaction event matching the information display condition; or displaying the target interactive information in a second area of the live streaming interface in response to the target interaction event not matching the information display condition, the first area being different from the second area.

In a second aspect of the present disclosure, an apparatus for displaying information is provided. The apparatus includes: an area presentation module, configured to present a first area in a live streaming interface of a live stream, the first area being configured to display interactive information based on a preset information display condition, the interactive information corresponding to an interaction event associated with the live stream; and an information display module, configured to in response to a target interaction event associated with the live stream: display target interactive information corresponding to the target interaction event at least in the first area in response to the target interaction event matching the information display condition; or display the target interactive information in a second area of the live streaming interface in response to the target interaction event does matching the information display condition, the first area being different from the second area.

In a third aspect of the present disclosure, an electronic device is provided. The device includes: at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by the processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIGS. 2A-2E illustrate example interfaces in accordance with some embodiments of the present disclosure;
FIG. 3 illustrates a flowchart of an example information display process according to some embodiments of the present disclosure;
FIG. 4 illustrates a schematic structural block diagram of an apparatus for displaying information according to some embodiments of the present disclosure; and
FIG. 5 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and/or use of data, and the like. These aspects all follow the corresponding laws and regulations and related regulations. In the embodiments of the present disclosure, all data is collected, acquired, processed, processed, forwarded, used, etc. , all of which are performed on the premise that the user knows and confirms. Accordingly, when implementing the embodiments of the present disclosure, the type, the usage scope, the usage scene of the data or information that may be involved, and the like should be notified to the user and acquire the authorization of the user in an appropriate manner according to the relevant laws and regulations. The specific notification and/or authorization manner may vary according to actual situation and application scene, and the scope of the present disclosure is not limited in this respect.

According to the solutions in the present specification and the embodiments, for example, personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by processing the basic function, and does not affect the basic function of the user.

As introduced above, a live streaming has become an important form of Internet interaction. People may, for example, initiate the live streaming and become a streamer of a live stream. Alternatively, people may also join another live stream to acquire corresponding live streaming content.

In a live streaming process, people may perform various types of interactions through comments, virtual gifts, likes, and the like. The corresponding interactive information will also be presented in a live streaming interface to be acquired by the streamer or other users. However, in the case that the interaction frequency in the live stream is high, a large amount of interactive information may be generated in the live stream, which will affect the efficiency of acquiring information by people.

In view of this, embodiments of the present disclosure provide a scheme for displaying information. According to the scheme, a first area may be presented in a live streaming interface of a live stream, the first area is configured to display interactive information based on a preset information display condition, the interactive information corresponding to an interaction event associated with the live stream. Further, in response to a target interaction event associated with the live stream: target interactive information corresponding to the target interaction event may be displayed at least in the first area in response to the target interaction event matching the information display condition. The target interactive information may be displayed in a second area of the live streaming interface in response to the target interaction event not matching the information display condition, the first area is different from the second area.

Based on the above manner, by providing the interactive information matching the preset information display condition for displaying in the live streaming interface, the embodiments of the present disclosure may aggregate specific interactive information into a specific area for centralized display, thus the efficiency of information acquisition may be improved within the live stream. In addition, for the streamer user, such information aggregation may help the streamer more efficiently acquire the interactive information followed within the live stream.

Various example implementations of this scheme are described in detail below in conjunction with the accompanying drawings.

### Example Environment

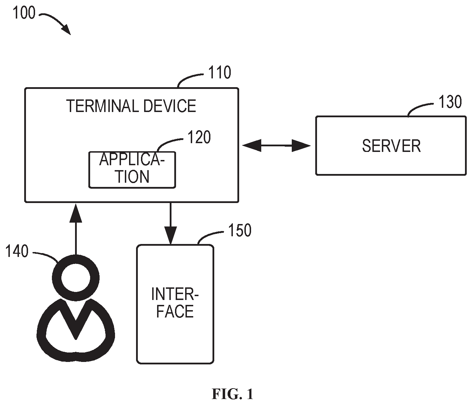

FIG. 1 illustrates a schematic diagram of an example environment 100 in which embodiments of the present disclosure may be implemented. As shown in FIG. 1, the example environment 100 may include a terminal device 110.

In this example environment 100, the terminal device 110 may run an application 120 for providing, viewing media content. The application 120 may be any suitable type of application for providing, viewing media content, an example of which may include, but is not limited to, an online video application, a live streaming application. A user 140 may interact with the application 120 via the terminal device 110 and/or its attachment device. The user 140 may, for example, provide a user of the live streaming content (also referred to as a streamer), a user viewing the live streaming (also referred to as a viewer).

In the environment 100 of FIG. 1, if the application 120 is active, the terminal device 110 may present a live streaming interface 150 through the application 120.

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination of foregoing, including accessories and peripherals of these devices, or any combination thereof. In some embodiments, the terminal device 110 may also support any type of interface for a user (such as a "wearable" circuit, etc.).

The server 130 may be a standalone physical server, may also be a server cluster composed of multiple physical servers, or a distributed system, or may even be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide a background service for the application 120 that supports the virtual scene in the terminal device 110.

A communication connection may be established between the server 130 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In an embodiment of the present disclosure, the server 130 and the terminal device 110 may implement signaling interaction by using the communication connection between the server 130 and the terminal device 110.

It should be understood that the structures and functions of the various elements in the environment 100 are described for illustrative purposes only and do not imply any limitation to the scope of the present disclosure.

Some example embodiments of the present disclosure will be described below with continued reference to the accompanying drawings.

### Example Interface

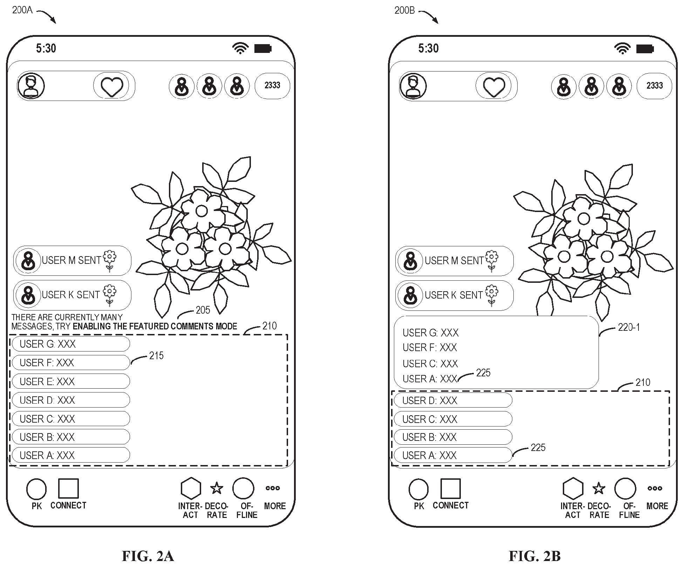

Some example embodiments of the present disclosure will be described below with continued reference to the accompanying drawings. FIG. 2A illustrates an example interface 200A, which may be provided, for example, by the terminal device 110 associated with the user 140 of the live stream, in accordance with some embodiments of the present disclosure.

The interface 200A may be, for example, the live streaming interface of the live stream. Correspondingly, during live streaming of the live stream, the terminal device 110 may present the interface 200A to the user 140.

As shown in FIG. 2A, the interface 200A may include, for example, a display area 210 (also referred to as a second area), which may be configured to present interactive information 215 corresponding to a predetermined type of interaction event in the live stream.

For example, such interactive information 215 may include comment information corresponding to the comment event, gift information corresponding to the specific gift interaction event, information corresponding to the user entering or exiting the live stream, and the like.

Conventionally, the display area 210 may sequentially display such interactive information 215 according to a time sequence. As discussed above, this will result in more interaction events within the live stream, the display area 210 will present a large amount of interactive information 215, which makes it difficult for the user 140 to efficiently acquire its information followed.

In some embodiments, the terminal device 110 may present an entry 205 in the interface 200A. Such an entry 205 may be configured to enable display of a first area (as will be described below, a display area 220-1 or a display area 220-2) in the interface 200A.

In some embodiments, the terminal device 110 may display, in the live streaming interface 200A, a first entry 205 for enabling the first area in response to a set of interaction events associated with the live stream satisfying a first preset condition. Such a first preset condition may be related to a number of the interaction events of the set of interaction events. For example, in a case that the number of the interaction events of the set of interaction events occurring within the predetermined event of the live stream exceeds a threshold number (for example, a number of comments received within 1 minute is greater than a preset number), the terminal device 110 may present the first entry 205.

Further, after receiving a selection of the first entry 205, the terminal device 110 may, for example, present an interface 200B shown in FIG. 2B. As shown in FIG. 2B, the interface 200B may include the display area 220-1 (also referred to as the first area).

As another example, after receiving the selection of the first entry 205, the terminal device 110 may also be configured to enable the enabling control of the display area 220-1, for example. After receiving a selection of the enabling control, the terminal device 110 may present the interface 200B shown in FIG. 2B.

Different from the display area 210, the display area 220-1 may be associated with the preset information display condition or an information display policy. That is, only the interactive information matching the information display condition is displayed in the display area 220-1. For example, the information display condition may be configured to indicate which interactive information may be presented in the display area 220-1, and/or which interactive information is not presented in the display area 220-1.

For example, such an information display condition may be associated with a virtual object involved in an interaction operation. Taking the comment event as an example, the terminal device 110 displays the comment information in the display area 220-1 only when the virtual object (that is, comment content) related to the comment event satisfies the preset matching policy. Such a virtual object may also include, for example, a gift object, an expression object, and the like in the live stream.

As another example, such an information display condition may also be associated with the user involved in the interaction operation. Taking the comment event as an example, the terminal device 110 displays the comment information in the display area 220-1 only when the user involved in the comment event (that is, the user who posts the comment) satisfies the preset matching policy.

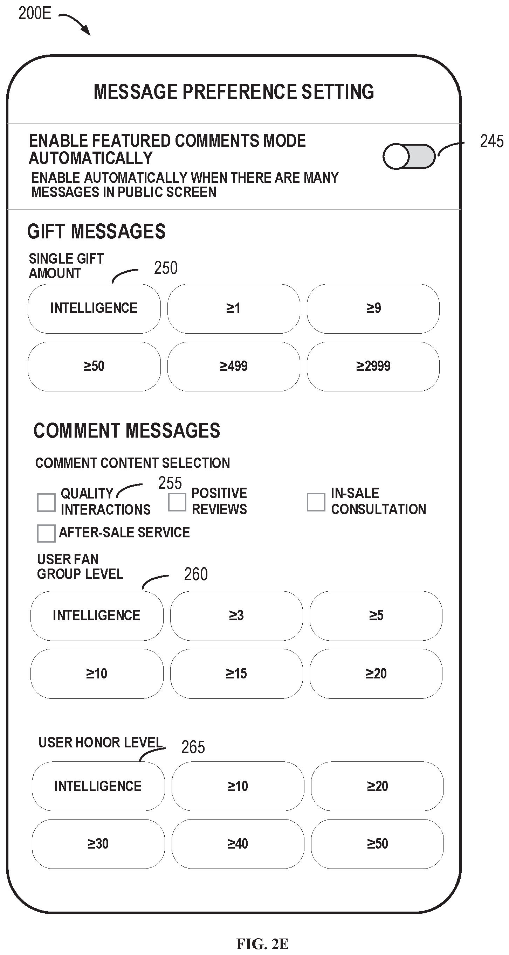

The above is merely an example embodiment of the information display condition, and specific details about the information display condition will be discussed in detail with reference to FIG. 2E.

In a case that the display area 220-1 is enabled, for the interaction event occurring in the live stream, the terminal device 110 and/or the server 160may determine whether the interaction event matches the preset information display condition.

Taking the comment information 225 as an example, when the content of the comment information 225 matches the information display condition, the terminal device 110 may display the comment information 225 at least in the display area 220-1.

For example, if the content of the comment information 225 satisfies the preset information display condition (for example, relating to commodity consultation content), the terminal device 110 may display the comment information 225 in the display area 220-1, for example. Therefore, it may be more convenient for the live streamer or other users to follow the consultation requirement of the user.

Alternatively or additionally, the terminal device 110 may further continue to display the comment information 225 in the display area 210 according to a default logic. As another example, if the comment information 225 determines to match the information display condition, the terminal device 110 may not display the comment information 225 in the display area 210, for example.

In contrast, if the interaction event matches the preset information display condition, the terminal device 110 may display the corresponding interactive information in other areas different from the display area 220-1.

For example, if the comment content posted by the specific user does not match the information display condition, the terminal device 110 may display the comment content in the display area 210 without displaying in the display area 220-1.

It should be understood that, in a case that the information display condition corresponding to the display area 220-1 is not satisfied, the display area of the interactive information may be determined based on the container type in the interface. For example, the comment information may be displayed in the display area 210 corresponding to the comment container. In a case that the types of the interaction events are different, the display areas of their corresponding interactive information may also change accordingly.

In this way, the embodiments of the present disclosure may aggregately display the interactive information followed for the user through the display area 220-1, thereby improving the efficiency of acquiring the information within the live stream by the user.

In some embodiments, as shown in FIG. 2B, the terminal device 110 may simultaneously present the display area 220 -1 and the display area 210.

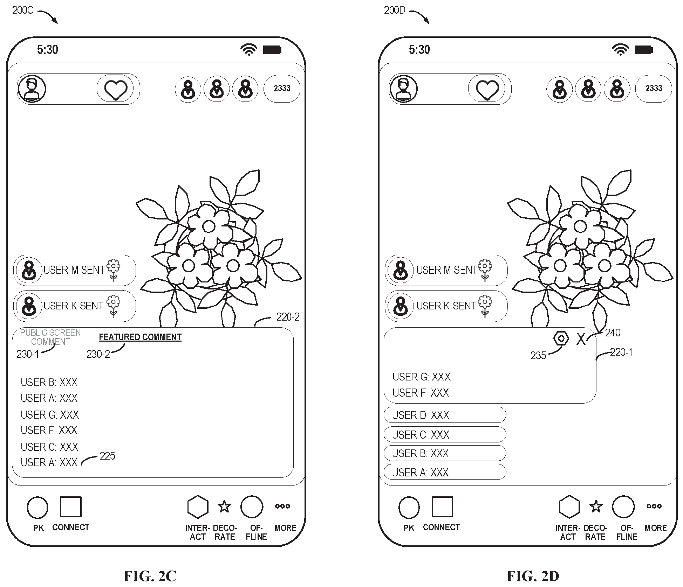

FIG. 2C provides an example interface 200C that may also be presented based on the selection of the first entry 205 in FIG. 2A, in accordance with another embodiment of the present disclosure. As shown in FIG. 2C, the terminal device 110 may present the display area 220-2. In a case that the display area 220-2 corresponds to a label item 230-2, a display logic of the information in the display area 220-2 may be the same as that in the display area 220-1 described above with reference to FIG. 2B. That is, it may display the interactive information matching the preset information display condition.

Different from the example shown in FIG. 2B, the terminal device 110 may, for example, only present the display area 220-2 in the interface 200C. In addition, in a case that a preset switching operation is received (for example, for a selection of a label item 230-1), the terminal device 110 switches to displaying the display area 210 as discussed with reference to FIG. 2A in the live streaming interface 200C. Thus, the terminal device 110 may present the display area 210 or the display area 220-2 in the interface, for example, based on a switching operation of the user.

Similar to the logic described in FIG. 2B, in a case that the interaction event matches the preset information display condition, the terminal device 110 may display the corresponding interactive information at least in the display area 220-2. In contrast, in a case that the interaction event does not match the preset information display condition, the terminal device 110 may display its corresponding interactive information in its default display area (for example, the display area 210).

In some embodiments, the display area 220-1 or 220-2 discussed with reference to FIGS. 2B and 2C may also be automatically presented by the terminal device 110 without necessarily relying on the user's selection of the first entry 205.

For example, the terminal device 110 may present such a display area 220-1 or a display area 220-2 by default in the live streaming interface. Alternatively, the terminal device 110 may automatically present the display area 220-1 or the display area 220-2 in the live streaming interface of the live stream in response to a set of interaction events associated with the live stream satisfy a second preset condition. For example, such a second preset condition may be related to the number of interaction events of the set of interaction events. For example, in a case that the number of interaction events of the set of interaction events occurring within the predetermined event of the live stream exceeds the threshold number (e.g., the number of comments received within 1 minute being greater than the preset number), the terminal device 110 may automatically present the display area 220-1 or the display area 220-2.

In some embodiments, the display area 220-1 and/or the display area 220-2 may also support proper interaction of the user 140. For example, when receiving a preset operation (for example, sliding up or down) about the display area 220-1 and/or the display area 220-2, the terminal device 110 may, for example, scroll the interactive information displayed by the display area 220-1 and/or the display area 220-2 to display historical interactive information corresponding to at least one historical interaction event, where the at least one historical interaction event matches the information display condition.

Therefore, the embodiments of the present disclosure may support the user 140 to more conveniently acquire the interactive information concerned followed by the user 140 through the display area 220-1 and/or the display area 220-2, and avoid omission of the message.

In some embodiments, in a case that the preset operation associated with the display area 220-1 is received, the terminal device 110 may stop presenting the display area 220-1 in the live streaming interface. For example, as shown in FIG. 2D, the terminal device 110 may be associated with the display area 220-1 to provide a third entry 240 for closing the display area 220-1. Upon receiving a selection of the third entry 240, the terminal device 110 may stop presenting the display area 220-1 in the live streaming interface.

Further, as shown in FIG. 2D, the terminal device 110 may further be associated with the display area 220-1 to provide a second entry 235 for configuring the information display condition. For example, in a case that the user clicks the display area 220-1, the terminal device 110 may display the second entry 235 in the display area 220-1.

Further, in a case that a selection of the second entry 235 is received, the terminal device 110 may, for example, present an interface 200E shown in FIG. 2E. The interface 200E may also be referred to as a configuration interface. As shown in FIG. 2E, the configuration interface 200E may be configured to configure the information display condition corresponding to the display area 220-1.

For example, the configuration interface 200E may include a control 245 to configure to indicate whether to automatically enable the first area (e.g., the display area 220-1 or the display area 220-2) in the live streaming interface. For example, in a case that the control 245 is set to on state, the terminal device 110 may automatically present the display area 220-1 or the display area 220-2 in the live streaming interface of the live stream, based on the logic introduced above, and in a case that the set of interaction events associated with the live stream satisfies the second preset condition.

Additionally, the configuration interface 200E may further include a plurality of sets of configuration items corresponding to a plurality of information dimensions, wherein each of the plurality of sets of configuration items indicates to configure a matching policy associated with a corresponding information dimension.

For example, a first set of configuration items 250 may include a plurality of configuration items corresponding to a first information dimension (e.g., a gift amount). The user 140 may indicate a display rule of a gift message by selecting a specific configuration item.

For example, in a case that "≧ 50" is selected, only if the gift amount is greater than or equal to 50, the information corresponding to the gift event is displayed in the display area 220-1 or the display area 220-2.

In addition, the first set of configuration items 250 may further include, for example, a target configuration item "intelligence", and in a case that the target configuration item is selected, the terminal device 110 will automatically determine a target matching policy corresponding to the target information dimension based on the set of interaction events associated with the live stream. For example, if "intelligence" is selected in this information dimension of a single gift amount, the terminal device 110 may automatically determine the threshold for selecting the gift information based on the gift amount of the gift received for a period of time within the live stream.

Additionally, the configuration interface 200E may further include a set of configuration items 255 corresponding to this information dimension of "a content classification". Such a set of configuration items 255 may, for example, indicate a content classification of interactive information to be presented in the first area.

Taking the comment information as an example of the interactive information, in a case that a content classification label of the comment information matches the selected configuration item 255, the terminal device 110 may display the comment information in the display area 220-1 or the display area 220 -2.

For example, if the user 140 selects two configuration items of "positive reviews" and "after-sale service", the comment content classified to "positive reviews" or "after-sale service" in the live stream will be automatically displayed in the display area 220-1 or the display area 220-2.

It should be understood that the content of the interactive information may be classified by the terminal device 110, the server 160, and/or other suitable computing devices by using an appropriate classification technology to determine whether its corresponding classification label matches the selected configuration item. For example, the classification label may be determined based on a semantic class of the text comment information or the audio quality information.

In this way, the embodiments of the present disclosure may further support the user to configure the interactive information followed by the user, thereby improving the efficiency of information acquisition.

Additionally, as shown in FIG. 2E, the configuration interface 200E may further include a first set of configuration items 260 and a second set of configuration items 265 associated with the user. The first set of configuration items 260 may, for example, be associated with a user fan group level; the second set of configuration items 265 may be associated with a user honor level. It should be understood that the information display condition may further be set based on other suitable information dimension associated with the user.

Similar to the configuration item 250, the "intelligence" configuration item in the first set of configuration items 260 and/or the second set of configuration items 265 may indicate the terminal device 110 and/or the server 160to automatically set the information display condition based on information of a particular type of user within the live stream and/or the user participating in the interaction operation.

Based on the manner discussed above, the embodiments of the present disclosure may further support the user to customize the information display condition of the first area, thereby helping the user to more efficiently acquire the interactive information followed by the user.

In some embodiments, the interfaces 200A-200E as discussed above may be the live streaming interface for the live streamer of the live stream. In this way, the live streamer may be more efficiently supported to acquire the interactive information of the live streamer followed in the live streaming process, thereby avoiding omission of important interactive information. Additionally or alternatively, the live streaming interface viewed by the viewer may not, for example, display the first area (e.g., the display area 220-1 or display area 220-2) as discussed above.

### Example Process

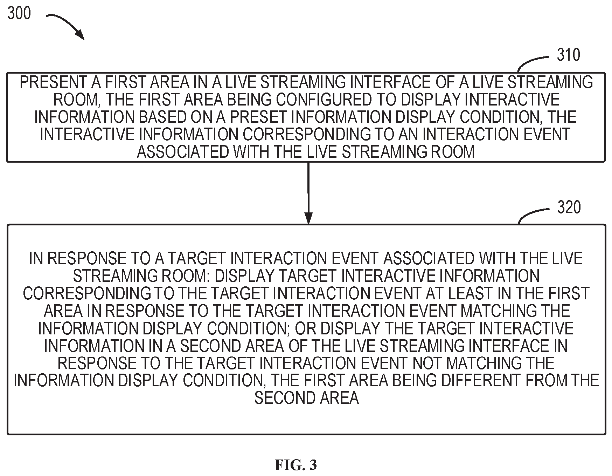

FIG. 3 illustrates a flowchart of an example information display process 300 according to some embodiments of the present disclosure. The process 300 may be implemented at the terminal device 110 associated with the user (e.g., the streamer, the user or the viewer participating in a live streaming event) of the live stream. The process 300 is described below with reference to FIG. 1.

As shown in FIG. 3, in block 310, the terminal device 110 presents a first area in a live streaming interface of a live stream, the first area being configured to display interactive information based on a preset information display condition, the interactive information corresponding to an interaction event associated with the live stream.

In block 320, in response to a target interaction event associated with the live stream: the terminal device 110 displays target interactive information corresponding to the target interaction event at least in the first area in response to the target interaction event matching the information display condition; or the terminal device 110 displays the target interactive information in a second area of the live streaming interface in response to the target interaction event not matching the information display condition, the first area being different from the second area.

In some embodiments, presenting the first area in the live streaming interface of the live stream includes: displaying, in the live streaming interface, a first entry for enabling the first area; and presenting the first area in the live streaming interface based on a selection of the first entry.

In some embodiments, displaying, in the live streaming interface, the entry for enabling the first area, includes: displaying, in the live streaming interface, the first entry for enabling the first area in response to a set of interaction events associated with the live stream satisfying a first preset condition.

In some embodiments, the first preset condition indicates that a number of the interaction events in the set of interaction events is greater than a threshold.

In some embodiments, presenting the first area in the live streaming interface of the live stream includes: presenting the first area automatically in the live streaming interface of the live stream in response to a set of interaction events associated with the live stream satisfying a second preset condition.

In some embodiments, the process 300 further includes: displaying, in the first area, a second entry for configuring the information display condition; and displaying a configuration interface for configuring the information display condition in response to receiving a selection of the second entry.

In some embodiments, the configuration interface includes a plurality of sets of configuration items corresponding to a plurality of information dimensions, wherein each of the plurality of sets of configuration items indicates to configure a matching policy associated with a corresponding information dimension.

In some embodiments, a plurality of sets of configuration controls includes a set of configuration controls corresponding to a target information dimension, the set of configuration controls including a target matching item, and the target matching item being configured to indicate to determine a target matching policy corresponding to the target information dimension automatically based on a set of interaction events associated with the live stream.

In some embodiments, the process 300 further includes: stopping displaying the first area in the live streaming interface in response to receiving a first preset operation associated with the first area.

In some embodiments, the information display condition indicates at least a content classification of interactive information to be presented in the first area.

In some embodiments, the interactive information is comment information within the live stream, and the content classification is determined based on a semantic class of the comment information.

In some embodiments, the live streaming interface corresponds to a live streamer of the live stream.

In some embodiments, the process 300 further includes: presenting simultaneously the first area and the second area in the live streaming interface; or displaying the first area or the second area in the live streaming interface based on a preset switching operation.

In some embodiments, the process 300 further includes: displaying, in the first area, historical interactive information corresponding to at least one historical interaction event in response to receiving a second preset operation associated with the first area, the at least one historical interaction event matching the information display condition.

### Example Apparatus and Device

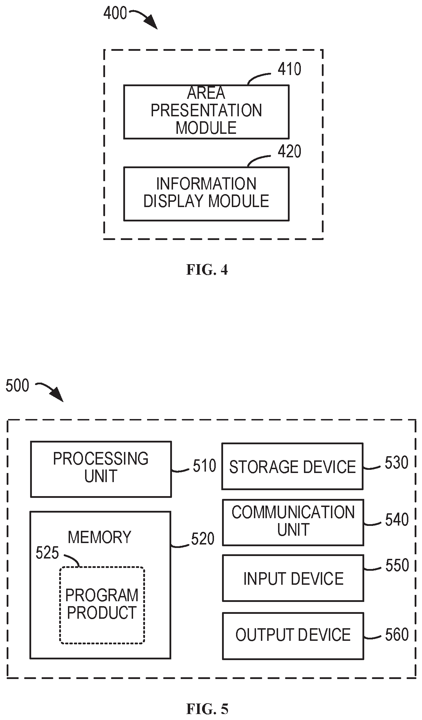

Embodiments of the present disclosure further provide a corresponding apparatus for implementing the above method or process. FIG. 4 illustrates a schematic structural block diagram of an apparatus 400 for displaying information according to some embodiments of the present disclosure. The apparatus 400 may be implemented or included in the terminal device 110. The various modules/components in the apparatus 400 may be implemented by hardware, software, firmware, or any combination thereof.

As shown in FIG. 4, the apparatus 400 includes: an area presentation module 410, configured to present a first area in a live streaming interface of a live stream, the first area being configured to display interactive information based on a preset information display condition, the interactive information corresponding to an interaction event associated with the live stream; and an information display module 420, configured to in response to a target interaction event associated with the live stream: display target interactive information corresponding to the target interaction event at least in the first area in response to the target interaction event matching the information display condition; or display the target interactive information in a second area of the live streaming interface in response to the target interaction event does matching the information display condition, the first area being different from the second area.

In some embodiments, the area presentation module 410 is further configured to: displaying, in the live streaming interface, a first entry for enabling the first area; and presenting the first area in the live streaming interface based on a selection of the first entry.

In some embodiments, the area presentation module 410 is further configured to: displaying, in the live streaming interface, the first entry for enabling the first area in response to a set of interaction events associated with the live stream satisfying a first preset condition.

In some embodiments, the first preset condition indicates that a number of the interaction events in the set of interaction events is greater than a threshold.

In some embodiments, the area presentation module 410 is further configured to: presenting the first area automatically in the live streaming interface of the live stream in response to a set of interaction events associated with the live stream satisfying a second preset condition.

In some embodiments, the apparatus 400 further includes a configuration module configured to: displaying, in the first area, a second entry for configuring the information display condition; and displaying a configuration interface for configuring the information display condition in response to receiving a selection of the second entry.

In some embodiments, the configuration interface includes a plurality of sets of configuration items corresponding to a plurality of information dimensions, wherein each of the plurality of sets of configuration items indicates to configure a matching policy associated with a corresponding information dimension.

In some embodiments, a plurality of sets of configuration controls includes a set of configuration controls corresponding to a target information dimension, the set of configuration controls including a target matching item, and the target matching item being configured to indicate to determine a target matching policy corresponding to the target information dimension automatically based on a set of interaction events associated with the live stream.

In some embodiments, the area presentation module 410 is further configured to stop displaying the first area in the live streaming interface in response to receiving a first preset operation associated with the first area.

In some embodiments, the information display condition indicates at least a content classification of interactive information to be presented in the first area.

In some embodiments, the interactive information is comment information within the live stream, and the content classification is determined based on a semantic class of the comment information.

In some embodiments, the live streaming interface corresponds to a live streamer of the live stream.

In some embodiments, the area presentation module 410 is further configured to: presenting simultaneously the first area and the second area in the live streaming interface; or displaying the first area or the second area in the live streaming interface based on a preset switching operation.

In some embodiments, the information display module 420 is further configured to: display, in the first area, historical interactive information corresponding to at least one historical interaction event in response to receiving a second preset operation associated with the first area, the at least one historical interaction event matching the information display condition.

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the function and scope of the embodiments described herein. The electronic device 500 shown in FIG. 5 may be configured to implement the terminal device 110 in FIG. 1.

As shown in FIG. 5, the electronic device 500 is in the form of a general-purpose electronic device. Components of the electronic device 500 may include, but are not limited to, one or more processors or a processing unit 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

The electronic device 500 typically includes a plurality of computer storage media. Such media may be any available media accessible to the electronic device 500, including, but not limited to, volatile and non-volatile media, removable and non-removable media. The memory 520 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 530 may be a removable or non-removable medium and may include a machine-readable medium, such as a flash drive, a magnetic disk, or any other medium, which may be capable of storing information and/or data and may be accessed within electronic device 500.

The electronic device 500 may further include additional removable/non-removable, volatile/non-volatile storage media. Although not shown in FIG. 5, a disk drive for reading or writing from a removable, non-volatile magnetic disk (e.g., a "floppy disk") and an optical disk drive for reading or writing from a removable, non-volatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 implements communicating with another electronic device through a communication medium. Additionally, the function of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, etc. , communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of a method, apparatus, device, and computer program product implemented in accordance with the present disclosure. It should be understood that each block of the flowcharts and/or block diagrams, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce an apparatus to implement the functions/acts specified in one or more blocks of the flowcharts and/or block diagrams. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in one or more blocks of the flowcharts and/or block diagrams.

The computer-readable program instructions may be loaded onto a computer, other programmable data processing apparatus, or other device, such that a series of operational steps are performed on the computer, other programmable data processing apparatus, or other device to produce a computer-implemented process such that the instructions executed on the computer, other programmable data processing apparatus, or other device implement the functions/acts specified in of one or more blocks of the flowcharts and/or block diagrams.

The flowcharts and block diagrams in the figures show an architecture, function, and operation of possible implementations of a system, method, and computer program product according to various implementations of the present disclosure. In this regard, each block in the flowcharts or block diagrams may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the function involved. It is also noted that each block in the block diagrams and/or flowcharts, as well as combinations of blocks in the block diagrams and/or flowcharts, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for displaying information comprising:
presenting a first area in a live streaming interface of a live stream, the first area being configured to display interactive information based on a preset information display condition, the interactive information corresponding to an interaction event associated with the live stream; and
in response to a target interaction event associated with the live stream: displaying target interactive information corresponding to the target interaction event at least in the first area in response to the target interaction event matching the information display condition; or displaying the target interactive information in a second area of the live streaming interface in response to the target interaction event not matching the information display condition, the first area being different from the second area.

2. The method of claim 1, wherein presenting the first area in the live streaming interface of the live stream comprises:
displaying, in the live streaming interface, a first entry for enabling the first area; and
presenting the first area in the live streaming interface based on a selection of the first entry.

3. The method of claim 2, wherein displaying, in the live streaming interface, the entry for enabling the first area, comprises:
displaying, in the live streaming interface, the first entry for enabling the first area in response to a set of interaction events associated with the live stream satisfying a first preset condition.

4. The method of claim 3, wherein the first preset condition indicates that a number of the interaction events in the set of interaction events is greater than a threshold.

5. The method of claim 1, wherein presenting the first area in the live streaming interface of the live stream comprises:
presenting the first area automatically in the live streaming interface of the live stream in response to a set of interaction events associated with the live stream satisfying a second preset condition.

6. The method of claim 1, further comprising:
displaying, in the first area, a second entry for configuring the information display condition; and
displaying a configuration interface for configuring the information display condition in response to receiving a selection of the second entry.

7. The method of claim 6, wherein the configuration interface comprises a plurality of sets of configuration items corresponding to a plurality of information dimensions, wherein each of the plurality of sets of configuration items indicates to configure a matching policy associated with a corresponding information dimension.

8. The method of claim 7, wherein the plurality of sets of configuration controls comprises a set of configuration controls corresponding to a target information dimension, the set of configuration controls comprising a target matching item, and the target matching item being configured to indicate to determine a target matching policy corresponding to the target information dimension automatically based on a set of interaction events associated with the live stream.

9. The method of claim 1, further comprising:
stopping displaying the first area in the live streaming interface in response to receiving a first preset operation associated with the first area.

10. The method of claim 1, wherein the information display condition indicates at least a content classification of interactive information to be presented in the first area.

11. The method of claim 10, wherein the interactive information is comment information within the live stream, and the content classification is determined based on a semantic class of the comment information.

12. The method of claim 1, wherein the live streaming interface corresponds to a live streamer of the live stream.

13. The method of claim 1, further comprising:
presenting simultaneously the first area and the second area in the live streaming interface; or
displaying the first area or the second area in the live streaming interface based on a preset switching operation.

14. The method of claim 1, further comprising:
displaying, in the first area, historical interactive information corresponding to at least one historical interaction event in response to receiving a second preset operation associated with the first area, the at least one historical interaction event matching the information display condition.

15. An apparatus for displaying information comprising:
an area presentation module, configured to present a first area in a live streaming interface of a live stream, the first area being configured to display interactive information based on a preset information display condition, the interactive information corresponding to an interaction event associated with the live stream; and
an information display module, configured to in response to a target interaction event associated with the live stream: display target interactive information corresponding to the target interaction event at least in the first area in response to the target interaction event matching the information display condition; or display the target interactive information in a second area of the live streaming interface in response to the target interaction event does matching the information display condition, the first area being different from the second area.

16. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 14.

17. A computer-readable storage medium having stored thereon a computer program executable by a processor to implement the method of any of claims 1 to 14.
